## Europäisches Patentamt
## European Patent Office
## Office européen des brevets

(19)

(11) Veröffentlichungsnummer: **0 008 318**
**B1**

(12) **EUROPÄISCHE PATENTSCHRIFT**

(45) Veröffentlichungstag der Patentschrift:
29.04.81

(51) Int. Cl.³: **B 23 B 31/16**

(21) Anmeldenummer: **79101226.3**

(22) Anmeldetag: **23.04.79**

(54) **Spannfutter für Drehmaschinen.**

(30) Priorität: **18.08.78 DE 2836191**
**17.10.78 DE 2845133**

(43) Veröffentlichungstag der Anmeldung:
**05.03.80 Patentblatt 80/5**

(45) Bekanntmachung des Hinweises auf die Patenterteilung:
**29.04.81 Patentblatt 81/17**

(84) Benannte Vertragsstaaten:
**CH DE FR GB IT**

(56) Entgegenhaltungen:
**DE-A1-2 711 904**
**DE-B1-2 436 529**
**US-A-3 682 491**

(73) Patentinhaber: **Röhm, Günter Horst,**
**Heinrich-Röhm-Strasse 50, D-7927 Sontheim (DE)**

(72) Erfinder: **Röhm, Günter Horst, Heinrich-Röhm-Strasse 50,**
**D-7927 Sontheim (DE)**

(74) Vertreter: **Fay, Hermann, Dipl.-Phys. Dr., Postfach 1767,**
**Ensingerstrasse 21 D-7900 Ulm (Donau) (DE)**

## Spannfutter für Drehmaschinen

Die Erfindung betrifft ein Spannfutter mit radial im Futterkörper verstellbaren Spannbakken, die zu ihrer Verstellung einzeln oder gemeinsam mit einem Antriebsglied in kraft- und formschlüssigem Eingriff stehen, wobei die Spannbacken radial und quer zur Futterachse in einen axial vorderen Backenteil und einen axial hinteren Backenteil aufgetrennt sind, beide Backenteile jeweils für sich radial verstellbar im Futterkörper geführt sind, und nur der hintere Backenteil mit dem Antriebsglied im Eingriff steht, und wobei ein ein- und ausrückbares Kupplungsstück in Form eines am hinteren Backenteil parallel zur Futterachse geführten, in radialer Richtung starr gehaltenen Schiebers vorgesehen ist, der im eingerückten Kupplungszustand beide Backenteile zur radialen Mitnahme des vorderen Backenteiles durch den hinteren Backenteil verbindet und im ausgerückten Kupplungszustand den vorderen Backenteil zur vom hinteren Backenteil unabhängigen radialen Verstellung freigibt, und der zur Verstellung zwischen dem eingerückten und dem ausgerückten Zustand durch ein von außen betätigbares Stellglied antreibbar ist, das seinerseits im wesentlichen radial gegen die nach außen gerichtete Rückstellkraft einer Feder verstellbar im hinteren Backenteil geführt ist und Führungsflächen für den axialen Antrieb des Schiebers aufweist.

Derartige Spannfutter besitzen den Vorteil, daß nur der vordere Backenteil ausgewechselt werden braucht und daß es allein durch Verstellen des Kupplungsstückes möglich ist, die beiden Backenteile zum Spannvorgang miteinander zu verbinden oder zum Auswechseln des vorderen Backenteils von einander zu trennen. Sind beide Backenteile getrennt, kann der vordere Backenteil ausgewechselt oder gegenüber dem hinteren Backenteil verstellt werden, wobei der hintere Backenteil in seiner Stellung im Futterkörper unverändert stehen und insbesondere im kraft- und formschlüssigen Eingriff mit dem die radiale Backenverstellung bewirkenden Antriebsglied verbunden bleibt. Dieser Eingriff braucht somit zum Backenwechsel nicht vorübergehend aufgehoben werden.

Um bei solchen etwa in der DE-A1-2 711 904 beschriebenen Spannfuttern die Kupplungsschieber zu verstellen, ist es erforderlich, die Stellglieder für die einzelnen Kupplungsglieder einzeln für sich von Hand zu betätigen. Das kann zeitaufwendig und umständlich sein, besonders dann, wenn die Stellglieder je nach Drehstellung des stillstehenden Futters zu ihrer Betätigung nicht alle in gleicher Weise griffgünstig liegen, sondern das Futter zwischen der Betätigung zweier Stellglieder erst verdreht werden muß.

Der Erfindung liegt die Aufgabe zu Grunde, ein Spannfutter der eingangs genannten Art so auszubilden, daß sämtliche Stellglieder in einfacher Weise betätigt werden können, und daß dabei im übrigen die Möglichkeit entsteht, die Stellglieder gegen versehentliche Betätigung zu sichern.

Diese Aufgabe wird nach der Erfindung dadurch gelöst, daß das Stellglied in Richtung radial nach außen unter der Rückstellkraft der Feder mit seinem radial äußeren Ende an einen am Umfang des Futterkörpers koaxial gelagerten drehbaren Entriegelungsring anschlägt und durch diesen Anschlag in seiner dem ausgerückten Kupplungszustand der Schieber entsprechenden Stellung gehalten ist, und daß der Entriegelungsring für die Stellglieder Ausnehmungen aufweist, in die die Stellglieder unter der Kraft ihrer Federn so weit eintreten können, daß die Schieber an den Spannbacken in den eingerückten Kupplungszustand übergehen. Vorzugsweise besitzen die Ausnehmungen im Entriegelungsring in der zum ausgerückten Kupplungszustand der Schieber führenden Drehrichtung eine schräge Stellflanke, mittels der durch Verdrehen des Entriegelungsringes die Stellglieder radial einwärts und dadurch die Schieber in den ausgerückten Kupplungszustand verstellbar sind.

Der durch die Erfindung erreichte Fortschritt besteht zunächst darin, daß bei dem erfindungsgemäßen Spannfutter alle Stellglieder durch den in jeder Drehstellung des Futterkörpers gleich gut zugänglichen Entriegelungsring durch einfaches Verdrehen desselben auf dem Futterkörper betätigt werden können. Darüber hinaus sind die Stellglieder in ihrer in die Ausnehmungen des Entriegelungsringes vorstehenden, dem eingerückten Kupplungszustand der Schieber entsprechenden Stellung durch den sie übergreifenden Entriegelungsring gegen ein versehentliches Niederdrücken gesichert, das zu einer unbeabsichtigten und unter Umständen gefahrträchtigen Entkupplung beider Backenteile führen könnte.

Im einzelnen besteht die Möglichkeit, daß die Stellglieder stets gemeinsam und gleichzeitig durch Verdrehen des Entriegelungsringes verstellt werden, daß sie also insbesondere gleichzeitig an allen Spannbacken des Futters die Schieber in den ausgerückten Kupplungszustand verstellen. Bei einer Drehlage des Spannfutters mit zufällig nach unten weisender Backenführung kann das allerdings dazu führen, daß die in dieser Backenführung enthaltende Spannbacke nach unten aus dem Futterkörper herausfällt, während die anderen Spannbacken noch nach oben und/oder zur Seite hin aus dem Futterkörper entnommen werden. Auch kann nicht immer mit völliger Sicherheit ausgeschlossen werden, daß in der elektrischen Sicherheitsschaltung, die das Wiederanlaufen der Drehmaschine bei ausgerücktem Kupplungszustand der Schieber verhindert, kein Defekt enthalten wäre. Ein solcher Defekt könnte aber dazu führen, daß bei ausgekuppelten Schiebern beispielsweise nach Auswechseln einer der Spannbacken die Drehmaschine versehentlich wieder in Lauf gesetzt wird und die anderen ebenfalls noch freien Spannbacken vom Futterkörper abfliegen.

Jedoch können diese Schwierigkeiten in einfacher Weise dadurch gelöst werden, daß durch den Entriegelungsring höchstens immer nur eines der Stellglieder radial in den Futterkörper eindrückbar ist und alle jeweils anderen Stellglieder radial nach außen in die Ausnehmungen des Entriegelungsringes vorstehen. Am einfachsten kann das dadurch erreicht werden, daß die Ausnehmung sich durchgehend über den Umfang des Entriegelungsringes erstreckt und nur durch eine Anschlagfläche für die Stellglieder unterbrochen ist, die in Umfangsrichtung des Entriegelungsringes kürzer als der Abstand zwischen je zwei aufeinander folgenden Stellgliedern ist. Zum Betätigen aufeinander folgender Stellglieder muß dann allerdings der Entriegelungsring um einen verhältnismäßig großen Winkel verdreht werden, nämlich im wesentlichen um den Winkel zwischen den Spannbacken. Um diesen Drehwinkel zu verkleinern und dadurch die Handhabung des Entriegelungsringes noch zu vereinfachen, können mehrere Anschlagflächen vorgesehen und deren Anordnung so getroffen sein, daß die zwischen den Ausnehmungen des Entriegelungsringes liegenden Anschlagflächen in Umfangsrichtung des Entriegelungsringes so lang und in ihrer auf die Futterachse bezogenen Winkelteilung gegenüber der der Spannbackenanordnung so versetzt sind, daß beim Drehen des Entriegelungsringes immer nur eines der Stellglieder an einer der Anschlagflächen zur Anlage kommt und die dem ausgerückten Kupplungszustand der Schieber entsprechende Stellung einnimmt und die jeweils anderen Stellglieder in die Ausnehmungen vorstehen. Eine solche Ausbildung der Anschlagflächen kann in einfachster Weise dadurch verwirklicht werden, daß in einer der Umfangsrichtungen des Entriegelungsringes die Anschlagflächen um mindestens ihre Länge dichter aufeinander folgen als die Spannbacken, wobei nur zwischen zwei der Anschlagflächen ein größerer Umfangsabstand als der der Spannbacken entsteht, so daß — wie erforderlich, — die Summe aller Winkelabstände längs des Ringumfanges 360 Grad beträgt.

Im Ergebnis können dann die Spannbacken immer nur nacheinander entkuppelt, also immer nur an einer der Spannbacken die beiden Spannbackenteile voneinander getrennt werden, während an den jeweils anderen Spannbacken die beiden Spannbackenteile im sicheren Eingriff miteinander verbleiben. Ist daher bei einer Spannbacke der vordere Backenteil entkuppelt und beispielsweise vollständig entnommen worden, so sind die vorderen Backenteile der anderen Spannbacken nach wie vor fest im Futterkörper gehalten, so daß beim Backenwechseln selbst dann keine Gefahrensituation entstehen kann, wenn nach der Entnahme des vorderen Backenteiles an nur einer Spannbacke die Maschinenspindel wegen eines Defektes in der elektrischen Wiederanlaufsicherung der Drehmaschine versehentlich zu laufen beginnt. Die vorderen Backenteile nur nacheinander an den Spannbacken auswechseln zu können, trägt also wesentlich zur größeren Sicherheit des erfindungsgemäßen Spannfutters bei.

Im folgenden wird die Erfindung an einem in der Zeichnung dargestellten Ausführungsbeispiel näher erläutert; es zeigt

Figur 1 einen Axialschnitt durch ein Spannfutter nach der Erfindung,

Figur 2 einen Teilschnitt in Richtung II-II durch das Spannfutter nach Figur 1,

Figur 3 einen Axialschnitt durch eine weitere Ausführungsform des Spannfutters nach der Erfindung,

Figur 4 einen Schnitt in Richtung IV-IV durch das Spannfutter nach Figur 3.

In der Zeichnung ist der Futterkörper des Spannfutters allgemein mit 1, die darin radial verstellbar geführten Spannbacken sind allgemein mit 2 bezeichnet.

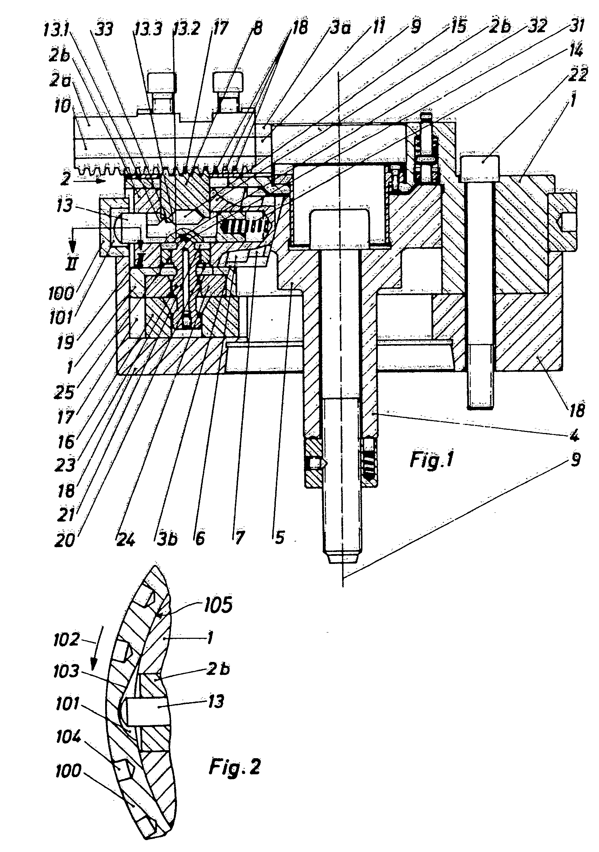

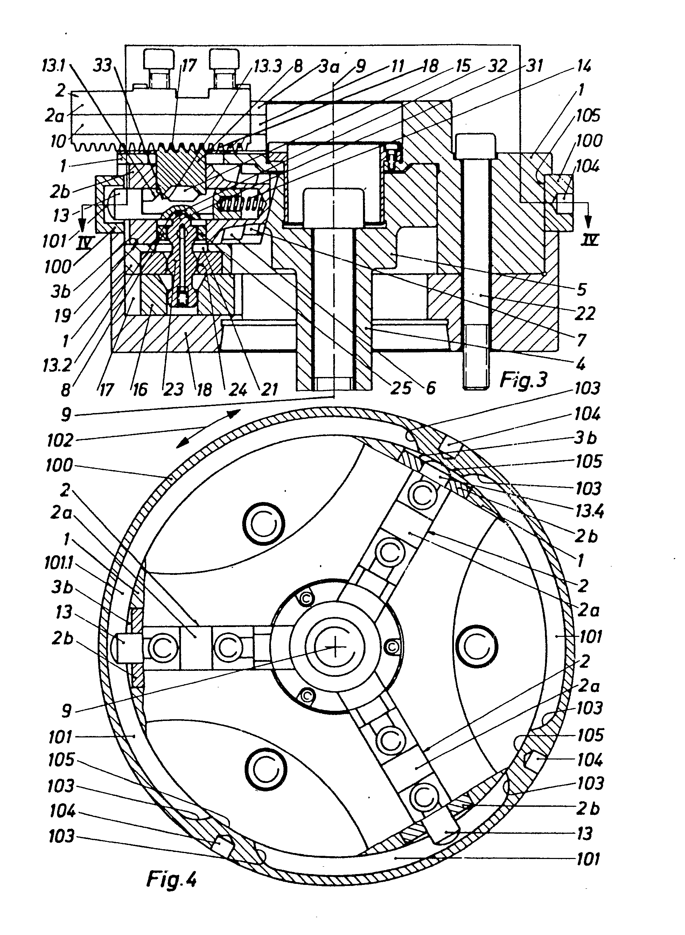

Zu ihrer Führung sind im Futterkörper radiale Führungsnuten vorgesehen. Im Axialschnitt nach den Figuren 1 und 3 ist jeweils nur eine Spannbacke dargestellt. Jedoch besitzt ein solches Futter mehr als nur eine, in der Regel drei Spannbacken 2. Die Spannbacken 2 stehen zu ihrer radialen Verstellung mit einem Antriebsglied 4 im kraft- und formschlüssigen Eingriff, das in den Ausführungsbeispielen eine axial verstellbare Treibhülse 5 besitzt, die über Keilhaken 6, 7 mit den Spannbacken 2 im Eingriff steht, wobei der Keilhaken 6 an der Treibhülse 5, der Keilhaken 7 an der Spannbacke 2 sitzt. Wird die Treibhülse 5 in Figur 1 oder 3 nach unten verschoben, so werden die Spannbacken radial einwärts bewegt, bei entgegengesetzter axialer Verstellung der Treibhülse 5 dagegen auswärts verschoben. Die Treibhülse 5 kann in üblicher und hier nicht näher zu beschreibender Weise durch einen nicht dargestellten Spannzylinder betätigt werden, dessen Spannkolben durch die ebenfalls in der Zeichnung nicht dargestellte hohle Drehmaschinenspindel über eine Zugstange oder ein Zugrohr mit der Treibhülse 5 verbunden sein kann. Ein solcher Kraftspannzylinder kann aber auch unmittelbar im Futterkörper 1 angeordnet sein. Die in den Ausführungsbeispielen vorgesehenen Keilhaken 6, 7 können auch durch andere, den Antrieb der Spannbacken 2 durch das Antriebsglied 4 vermittelnde bekannte Verbindungsglieder ersetzt sein. Die Spannbacken 2 sind radial und quer zur Futterachse 9, in den Ausführungsbeispielen in einer zur Futterachse 9 senkrechten Ebene, in einen axial vorderen Backenteil 2a und einen axial hinteren Backenteil 2b getrennt. Beide Backenteile 2a, 2b sind jeweils für sich radial verstellbar in eigenen Nuten des Futterkörpers 1 geführt, nämlich der vordere Backenteil 2a mit Führungsnuten 10 an entsprechenden Führungsleisten 11 einer radialen Nut 3a des Futterkörpers 1, und der hintere kreiszylindrische Backenteil 2b in einer entsprechend kreiszylindrischen Führungsnut 3b des Futterkörpers 1. Von beiden Backenteilen 2a, 2b steht jeweils nur der hintere Backenteil 2b mit dem Antriebsglied 4, in den Ausführungsbeispielen also den Keilhaken 6 der Treibhülse 5, im Eingriff. Ein ein- und ausrückbares Kupplungsstück in Form eines im hinteren Backenteil 2b parallel zur Futterachse 9 verschiebbar geführten, in radialer Richtung am Backenteil 2b starr, d. h. unverstellbar gehaltenen Kupplungsschiebers 8 von im wesentlichen kreiszylindrischem Querschnitt dient dazu, daß im eingerückten Kupplungszustand, wie er in der Zeichnung dargestellt ist, beide Backenteile 2a, 2b zur radialen Mitnahme des vorderen Backenteiles 2a durch den hinteren Backenteil 2b starr verbunden sind, während der Kupplungsschieber 8 im nicht dargestellten axial zurückverschobenen, also ausgerückten Kupplungszustand den vorderen Backenteil 2a zur vom hinteren Backenteil 2b unabhängigen radialen Verstellung freigibt, so daß der vordere Backenteil 2a gegenüber dem hinteren Backenteil 2b verschoben oder aus der radialen Führungsnut 3a vollständig herausgenommen und gegen einen anders gestalteten Backenteil ausgewechselt werden kann. Der hintere Backenteil 2b dagegen ist nicht auswechselbar und bleibt ständig im Eingriff mit dem Antriebsglied 4.

Der Schieber 8 trägt einen Kupplungskopf 17, der bei axial vorgestelltem Schieber 8, wie dargestellt, in radialer Richtung formschlüssig in zugeordnete Kupplungsaufnahmen 18 des vorderen Backenteiles 2a eingreift. Die Kupplungsaufnahmen 18 werden durch eine Querverzahnung an der dem hinteren Backenteil 2b zugewendeten Trennfläche des vorderen Backenteiles 2a gebildet. Der Kupplungskopf 17 ist mit einer entsprechenden Verzahnung versehen, die in die des vorderen Backenteiles 2a eingreift, wie es die Figuren 1 und 3 unmittelbar erkennen lassen.

Zur Verstellung zwischen dem eingerückten und dem ausgerückten Kupplungszustand sind die Kupplungsschieber 8 jeweils an einem von außen betätigbaren Stellglied 13 zwangsgeführt. Das Stellglied 13 ist seinerseits im wesentlichen radial verstellbar im hinteren Backenteil 2b geführt und besitzt schräge Führungsflächen 13.1 und 13.2 für die axiale Zwangsführung des Schiebers 8. Im einzelnen ist das Stellglied 13 ein gegen eine von einer Feder 14 gebildete Rückstellkraft radial einwärts gegen die Futterachse 9 eindrückbarer zylindrischer Bolzen, der ein im Schieber 8 vorgesehenes, die axiale Verstellbewegung des Schiebers 8 ermöglichendes Fenster 15 durchgreift und im Bereich dieses Fensters 15 die schrägen Führungsflächen 13.1 und 13.2 trägt.

Der Futterkörper 1 besitzt an der dem vorderen Backenteil 2a entgegengesetzten Seite des hinteren Backenteiles 2b eine Anschlagfläche 19 für die rückwärtige Stirnfläche 20 des Kupplungsschiebers 8. Diese Anschlagfläche 19 verriegelt den Kupplungsschieber 8 im eingerückten Kupplungszustand, solange der Kupplungsschieber 8 sich nicht gerade gegenüber einer Aussparung 21 befindet, die in der Anschlagfläche 19 vorgesehen ist und in die der Kupplungsschieber 8 bei der gezeichneten Stellung des hinteren Backenteiles 2b in axialer Richtung und radial im wesentlichen formschlüssig eintreten kann, wodurch er axial bis in den ausgerückten Kupplungszustand verstellbar ist. Ist somit der Schieber in die Aussparung 21 eingetreten, sperrt er den hinteren Backenteil 2b gegen radiale Verstellungen wegen des in dieser Richtung bestehenden Formschlusses zwischen dem Schieber 8 und der Aussparung 21, so daß im Ergebnis auch das Antriebsglied 4 keiner axialen Spannverstellungen mehr fähig ist. Die Drehmaschine kann somit bei betriebsmäßig intakter Wiederanlaufsicherung nicht anlaufen, wenn der Kupplungsschieber 8 im ausgerückten Kupplungszustand die Verbindung zwischen dem hinteren Backenteil 2b und dem vorderen Backenteil 2a an einer der Spannbacken 2 aufgehoben hat, weil Voraussetzung für die Freigabe des Wiederanlaufens die entsprechende Spannverstellung des Antriebsgliedes 4 ist.

Die Stellglieder 13 sind in der Zeichnung mit Ausnahme des in Figur 4 mit 13.4 bezeichneten Stellgliedes in ihrer radial äußeren Stellung gezeigt. Sie ermöglichen nur in der radial inneren Stellung (13.4 in Figur 4) die Bewegung des Kupplungsschiebers 8 in den ausgerückten Kupplungszustand. Bei der Rückbewegung unter der Wirkung der durch die Feder 14 erzeugten Rückstellkraft verstellt das Stellglied 13 den Kupplungsschieber 8 über die schrägen Führungsflächen 13.1 wieder in den eingerückten Kupplungszustand. In seiner radial äußeren Stellung verriegelt das Stellglied 13 den im eingerückten Kupplungszustand befindlichen Kupplungsschieber 8 durch an die schrägen Führungsflächen 13.1 anschließende radial gerichtete Sperrflächen 13.3, welchen entsprechend Figur 1 und 3 der Kupplungsschieber 8 mit radialen Anschlagflächen 33 anliegt. Der Kupplungsschieber 8 besitzt in dieser Stellung des Stellgliedes 13 somit keine Möglichkeit, in die für ihn vorgesehene Aussparung 21 des Futterkörpers 1 einzutreten, wenn er im Zuge der radialen Verstellung des hinteren Backenteiles 2b diese Aussparung 21 passiert. Der Eintritt des Schiebers 8 in die Aussparung 21 und damit seine Verstellung in den ausgerückten Kupplungszustand ist somit nur bei radial eingedrücktem Stellglied 13 möglich.

Zur Betätigung des Stellgliedes 13 dient ein am Umfang des Futterkörpers 1 koaxial gelagerter verdrehbarer Entriegelungsring 100, an dem das Stellglied 13 unter der Kraft der Feder 14 anschlägt. Für jedes Stellglied 13 besitzt der Entriegelungsring 100 eine Ausnehmung 101, 101.1 in die die Stellglieder 13 bei der in der Zeichnung dargestellten Drehstellung des Entriegelungsringes 100 unter der Kraft der Federn 14 so weit eintreten können, daß die Schieber 8 an allen Spannbacken 2 sich im eingerückten Kupplungszustand befinden. Wird der Entriegelungsring 100 in Richtung des Pfeiles 102 (Fig. 2 und 4) verdreht, so drücken in dieser Drehrichtung an die Ausnehmungen 101 anschließende schräge Stellflanken 103 die Stellglieder 13 radial nach innen und dadurch die Stellglieder 13 die Schieber 8 in den ausgerückten Kupplungszustand, wobei die Stellglieder 13 in ihrer nach innen gedrückten Stellung den sich in Umfangsrichtung zwischen den Ausnehmungen 101 erstreckenden Anschlagflächen 105 des Entriegelungsringes 100 anliegen. In jedem Fall übergreift der Entriegelungsring 100 die in seine Ausnehmungen 101 vorstehenden Stellglieder 13 und sichert sie so gegen versehentliches radiales Niederdrücken. Um die Verdrehung des Entriegelungsringes 100 zu erleichtern, ist er in den Ausführungsbeispielen außen mit Schlüsselaufnahmen 104 ausgestattet.

Im Ausführungsbeispiel nach den Figuren 1 und 2 sind die Ausnehmungen 101 längs des Umfanges des Entriegelungsringes 100 so gestaltet und angeordnet, daß die Verriegelungsglieder 13 aller Spannbacken 2 gleichzeitig radial nach innen gedrückt, die Schieber 8 also ebenfalls gleichzeitig an allen Spannbacken in den ausgerückten Kupplungszustand verstellt werden. Die Kupplung der beiden Spannbackenteile 2a, 2b wird daher an allen Spannbacken 2 gleichzeitig aufgehoben.

Im Ausführungsbeispiel nach den Figuren 3 und 4 können dagegen die Stellglieder 13 durch Verdrehen des Entriegelungsringes 100 immer nur einzeln und nacheinander radial nach innen gedrückt werden. In Figur 3 ist das in der gezeigten Drehlage des Entriegelungsringes 100 das schräg nach rechts oben zeigende Stellglied 13.4, während die beiden anderen, nach links bzw. rechts unten weisenden Stellglieder 13 in die Ausnehmungen 101 eingetreten sind, so daß sich die ihnen zugeordneten Spannbacken im eingekuppelten Zustand ihrer beiden Backenteile 2a, 2b befinden. Ersichtlich können durch Verdrehen des Entriegelungsringes 100 in Richtung des Pfeiles 102 auch die beiden letztgenannten Stellglieder 13 nacheinander radial einwärts gedrückt werden, jedoch nur immer so, daß die jeweils beiden anderen Stellglieder in die Ausnehmungen 101 vorstehen. Dies wird dadurch erreicht, daß die zwischen den Ausnehmungen 101 liegenden Anschlagflächen 105 für die Stellglieder 13 in Umfangsrichtung des Entriegelungsringes 100 so kurz und in ihrer auf die Futterachse 9 bezogenen Winkelteilung gegenüber der Spannbackenanordnung so versetzt sind, daß beim Drehen des Entriegelungsringes 100 immer nur eines der Stellglieder 13 an einer der Anschlagflächen 105 zur Anlage kommt, also dieses Stellglied 13.4 die dem ausgerückten Kupplungszustand der Schieber 8 entsprechende Stellung einnimmt, während die jeweils anderen Stellglieder 13 in die Ausnehmungen 101 vorstehen und dadurch keine Entkupplung der beiden Spannbackenteile 2a, 2b der diesen Stellgliedern 13 zugeordneten Spannbacken bewirken. Dazu genügt es in der einfachsten, deswegen in Figur 4 dargestellten Weise, daß in Umfangsrichtung des Entriegelungsringes 100 die Anschlagflächen 105 um mindestens ihre Länge dichter aufeinanderfolgen als die Spannbacken 2. Zwischen zwei der Anschlagflächen 105 entsteht dann für eine der Ausnehmungen 101.1 ein größerer Umfangsabstand, da die Summe aller Winkelabstände 360 Grad betragen muß.

Um die auf die Spannbacken 2a, 2b wirkenden Fliehkräfte auszugleichen, ist das Spannfutter mit im wesentlichen radial verstellbaren Fliehgewichten 16 versehen, wobei jeder Spannbacke 2a, 2b ein eigenes Fliehgewicht zugeordnet ist, so daß in den Figuren 1 und 3 wiederum nur eines dieser Fliehgewichte 16 erkennbar ist. Diese Fliehgewichte 16 sind in den Ausführungsbeispielen in Nuten 17 des die Verbindung des Futterkörpers 1 mit der nicht dargestellten Maschinenspindel über die Schrauben 22 bewirkenden Anschlußflansches 18 radial verschiebbar geführt. Zwischen den Fliehgewichten 16 und den Spannbacken 2 sind Hebel 23 vorgesehen, die im Futterkörper bei 24 schwenkbar abgestützt sind. Die Hebel 23 sind am einen Ende von den Fliehgewichten 16 beaufschlagt und drücken mit dem anderen Ende entgegen der Fliehkraft auf die Spannbacken 2. Dazu greifen die Hebel 23 mit dem backenseitigen Hebelende gelenkig und zur Erreichung einer guten Kraftübertragung zumindest in der Richtung radial nach innen auch formschlüssig in Aufnahmen 25 am axial hinteren Ende der Kupplungsschieber 8. Darüber hinaus sind diese Hebelenden mit den Kupplungsschiebern 8 so verbunden, daß die Kupplungsschieber 8 die Hebel 23 bei der Verstellbewegung zwischen den beiden Kupplungszuständen axial mitnehmen, was aber hier keiner Beschreibung im einzelnen bedarf. Jedenfalls sind für diese Längsverstellung die Hebel 23 sowohl in ihrer Abstützung 24 im Futterkörper 1 als auch in ihrem Anschluß an die Fliehgewichte 16 in Hebellängsrichtung mindestens um den axialen Verstellweg der Kupplungsschieber 8 verschiebbar.

Um den Kupplungsschieber 8 durch Niederdrücken des Stellgliedes 13 in den ausgerückten Kupplungszustand verstellen zu können, besitzt das Stellglied 13 auf der dem Hebel 23 zugekehrten Seite die schräge Führungsfläche 13.2. Der dieser Führungsfläche 13.2 zugeordnete Führungsvorsprung ist von einer Nase 31 am backenseitigen Hebelende gebildet, die durch die Aufnahme 25 für das Hebelende in das Fenster 15 des Kupplungsschiebers 8 vorsteht. Wird daher das Stellglied 13 gegen die Feder 14 niedergedrückt, wird über die Führungsfläche 13.2 und die Nase 31 mit zugeordneter Schrägfläche 31.1 zunächst der Hebel 23 axial zurückgedrückt, der über seine Verbindung den Kupplungsschieber 8 mitnimmt und dadurch in den ausgerückten Kupplungszustand verstellt, da gleichzeitig dessen durch die Sperrflächen 13.3 ausgeübte Verriegelung aufgehoben wird, denn die Schrägflächen 13.2 greifen an der Nase 31 des Hebels 23 erst an, wenn die Sperrflächen 13.3 aus dem Bereich der Schieberanschlagflächen 33 ausgetreten sind. Dazu ist zwischen der Nase 31 und den Schrägflächen 13.2 ein entsprechender toter Weg 32 vorgesehen.

## Patentansprüche

1. Spannfutter mit radial im Futterkörper (1) verstellbaren Spannbacken (2), die zu ihrer Verstellung einzeln oder gemeinsam mit einem Antriebsglied (4) in kraft- und formschlüssigem Eingriff stehen, wobei die Spannbacken (2) radial und quer zur Futterachse (9) in einen axial vorderen Backenteil (2a) und einen axial hinteren Backenteil (2b) aufgetrennt sind, beide Backenteile (2a, 2b) jeweils für sich radial verstellbar im Futterkörper (1) geführt sind, und nur der hintere Backenteil (2b) mit dem Antriebsglied (4) im Eingriff steht, und wobei ein ein- und ausrückbares Kupplungsstück in Form eines am hinteren Backenteil (2b) parallel zur Futterachse (9) geführten, in radialer Richtung starr gehaltenen Schiebers (8) vorgesehen ist, der im eingerückten Kupplungszustand beide Backenteile (2a, 2b) zur radialen Mitnahme des vorderen Backenteiles (2a) durch den hinteren Backenteil (2b) verbindet und im ausgerückten Kupplungszustand den vorderen Backenteil (2a) zur vom hinteren Backenteil (2b) unabhängigen radialen Verstellung freigibt und der zur Verstellung zwischen dem eingerückten und dem ausgerückten Zustand durch ein von außen betätigbares Stellglied (13) antreibbar ist, das seinerseits im wesentlichen radial gegen die nach außen gerichtete Rückstellkraft einer Feder (14) verstellbar im hinteren Backenteil (2b) geführt ist und Führungsflächen (13.1, 13.2) für den axialen Antrieb des Schiebers (8) aufweist, dadurch gekennzeichnet, daß das Stellglied (13) in Richtung radial nach außen unter der Rückstellkraft der Feder (14) mit seinem radial äußeren Ende an einen am Umfang des Futterkörpers (1) koaxial gelagerten drehbaren Entriegelungsring (100) anschlägt und durch diesen Anschlag in seiner dem ausgerückten Kupplungszustand der Schieber (8) entsprechenden Stellung gehalten ist, und daß der Entriegelungsring für die Stellglieder (13) Ausnehmungen (101) aufweist, in die die Stellglieder (13) bei entsprechender Drehstellung des Entriegelungsringes (100) unter der Kraft ihrer Federn (14) so weit eintreten können, daß die Schieber (8) an den Spannbacken (2) in den eingerückten Kupplungszustand übergehen.

2. Spannfutter nach Anspruch 1, dadurch gekennzeichnet, daß die Ausnehmungen (101) im Entriegelungsring (100) in der zum ausgerückten Kupplungszustand der Schieber (8) führenden Drehrichtung eine schräge Stellflanke (103) aufweisen, mittels der durch Verdrehen des Entriegelungsringes (100) die Stellglieder (13) radial einwärts und dadurch die Schieber (8) in den ausgerückten Kupplungszustand verstellbar sind.

3. Spannfutter nach Anspruch 1 oder 2, dadurch gekennzeichnet, daß durch den Entriegelungsring (100) höchstens immer nur eines der Stellglieder (13) radial in den Futterkörper (1) eindrückbar ist und alle jeweils anderen Stellglieder (13) radial nach außen in die Ausnehmungen (101, 101.1) des Entriegelungsringes (100) vorstehen.

4. Spannfutter nach Anspruch 3, dadurch gekennzeichnet, daß die Ausnehmungen (101, 101.1) sich durchgehend über den Umfang des Entriegelungsringes (100) erstreckt und nur durch eine Anschlagfläche (105) für die Stellglieder (13) unterbrochen ist, die in Umfangsrichtung des Entriegelungsringes (100) kürzer als der Abstand zwischen je zwei aufeinanderfolgenden Stellgliedern (13) ist.

5. Spannfutter nach Anspruch 3, dadurch gekennzeichnet, daß mehrere Anschlagflächen (105) vorgesehen und die zwischen den Ausnehmungen (101) liegenden Anschlagflächen (105) in Umfangsrichtung des Entriegelungsringes (100) so lang und in ihrer auf die Futterachse (9) bezogenen Winkelteilung gegenüber der der Spannbackenanordnung so versetzt sind, daß beim Drehen des Entriegelungsringes (100) immer nur eines der Stellglieder (13) an einer der Anschlagflächen (105) zur Anlage kommt und die dem ausgerückten Kupplungszustand der Schieber (8) entsprechende Stellung einnimmt, und die jeweils anderen Stellglieder (13) in die Ausnehmungen (101) vorstehen.

6. Spannfutter nach Anspruch 5, dadurch gekennzeichnet, daß in einer der Umfangsrichtungen des Entriegelungsringes (100) die Anschlagflächen (105) um mindestens ihre Länge dichter aufeinander folgen als die Spannbacken (2), wobei zwischen zwei der Anschlagflächen (105) eine Ausnehmung (101.1) größeren Umfangsabstandes als der der Spannbacken (2) entsteht.

## Claims

1. A clamping chuck comprising clamping jaws which are radially adjustable in the chuck body and which are in force-locking and form-locking engagement with an actuating member, for adjustment thereof, individually or jointly, wherein the jaws are divided radially and transversely with respect to the chuck centreline into an axially forward jaw portion and an axially rearward jaw portion, both jaw portions are each guided for themselves for radial adjustment in the chuck body, and only the rearward jaw portion is in engagement with the actuating member, and wherein there ist provided an engageable and disengageable coupling member in the form of a slider which is guided on the rearward jew protion parallel to the chuck centreline and which is held rigidly in the radial direction and which, in the engaged coupling condition, connects the two jaw portions for radial entrainment of the forward jaw portion by the rearward jaw portion and, in the disengaged coupling condition, releases the forward jaw portion for radial adjustment independently of the rearward jaw portion, and which ist actuable for displacement between the engaged and the disengaged conditions by a setting member which is actuable from the exterior and which in turn is guided in the rearward jaw portion for adjustment movement substantially radially against the outwardly directed return force of a spring and which has guide surfaces for the axial actuating movement of the slider, characterised in that, under the return force of the spring (14), the setting member (13) bears radially outwardly by means of its radially outer end against a rotatable release ring (100) mounted coaxially at the periphery of the chuck body (1), and is held in its position corresponding to the disengaged condition of the slider (8), by virtue of bearing against said ring, and that the release ring for the setting members (13) has recesses (101) into which the setting members (13) can pass, when the release ring (100) is in a corresponding rotary position, under the force of their springs (14), to such an extent that the sliders (8) at the clamping jaws (2) move into the engaged coupling condition.

2. A chuck according to claim 1 characterised in that the recesses (101) in the release ring (100) have an inclined setting side (103) in the direction which leads to the disengaged coupling condition of the sliders (8), the setting members (13) being displaceable radially inwardly by means of the inclined setting side (103), by rotary movement of the release ring (100), whereby the sliders (8) are displaceable into the disengaged coupling condition.

3. A chuck according to claim 1 or claim 2 characterised in that there is at most only ever one (13.1) of the setting members (13) which can be radially pressed into the chuck body (1) by the release ring (100), and all other setting members (13) project radially outwardly into the recesses (101, 101.1) of the release ring (100).

4. A chuck according to claim 3 characterised in that the recess (101, 101.1) extends continuously over the periphery of the release ring (100) and is interrupted only by an abutment surface (105) for the setting members (13), which abutment surface is shorter in the peripheral direction of the release ring (100) than the distance between each two successive setting members (13).

5. A chuck according to claim 3 characterised in that there is a plurality of abutment surfaces (105) and the abutment surfaces (105) which are disposed between the recesses (101) are of such a length in the peripheral direction of the release ring (100) and are so displaced in their angular distribution relative to the chuck centreline (9), with respect to that of the clamping jaw assembly that, when the release ring (100) is rotated, there is only ever one of the setting members (13) that comes to bear against one of the abutment surfaces (105) and occupies the position corresponding to the disengaged coupling condition of the sliders (8), while the respective other setting members (13) project into the recesses (101).

6. A chuck according to claim 5 characterised in that, in the peripheral direction of the release ring (100), the abutment surfaces (105) follow each other more closely by at least their length than the clamping jaws (2), and that a recess (101.1) of larger peripheral spacing is provided between two of the abutment surfaces (105).

**Revendications**

1. Mandrin de serrage comportant des mâchoires de serrage (2) qui sont déplaçables radialement dans le corps (1) du mandrin et qui, pour leur déplacement, sont individuellement ou collectivement en prise, par l'effet de forces et de conjugaison de formes, avec un organe d'entraînement (4), ces mâchoires (2) étant partagées, radialement et transversalement à l'axe du mandrin, en une partie antérieure (2a) et une partie postérieure (2b) (»antérieure« et »postérieure« en considérant une direction axiale), et les deux parties de chaque mâchoire (2a, 2b) étant guidées, chacune pour soi, avec possibilité de déplacement radial dans le corps (1) du mandrin, la partie postérieure étant seule en prise avec l'organe d'entraînement (4), ce mandrin comportant en outre, pour chaque mâchoire, une pièce d'accouplement qui peut être amenée à une position d'accouplement et à une position de désaccouplement et qui est réalisée sous la forme d'un coulisseau (8) guidé parallèlement à l'axe (9) du mandrin, sur la partie postérieure (2b), et maintenu rigidement en direction radiale, ce coulisseau reliant, dans la condition d'accouplement, les deux parties (2a, 2b) de la mâchoire de façon que la partie antérieure (2a) soit entraînée radialement par la partie postérieure (2b), et libérant, lorsqu'il est dans la condition de désaccouplement, la partie antérieure (2a) pour lui permettre d'être déplacée radialement, indépendamment de la partie postérieure (2b), ce coulisseau pouvant en outre, pour son déplacement entre la position d'accouplement et la position de désaccouplement, être entraîné par un organe de manoeuvre (13) qui est actionnable depuis l'extérieur et qui, pour sa part, est guidé dans la partie postérieure (2b) de la mâchoire et est déplaçable sensiblement radialement contre la force de rappel d'un ressort (14) dirigée vers l'extérieur, et présente des surfaces de guidage (13.1, 13.2) pour l'entraînement axial du coulisseau (8), ce mandrin étant caractérisé par le fait que, dans une direction radiale orientée vers l'extérieur, l'organe de manoeuvre (13) est mis, sous la force de rappel du ressort (14), en butée — par son extrémité extérieure (»extérieure« en considérant une direction radiale) — contre une bague de déverrouillage (100) montée coaxialement avec possibilité de rotation sur le pourtour du corps (1) du mandrin, et est maintenu dans sa position correspondant à la condition de désaccouplement des coulisseaux (8), et par le fait que la bague de déverrouillage présente des évidements (101) pour les organes de manoeuvre (13), lesquels organes sont, lorsque la bague de déverrouillage (100) est à une position angulaire correspandante, en mesure d'entrer, sous l'effet de la force de leurs ressorts (14), suffisamment loin dans ces évidements (101) pour que les coulisseaux (8) sur les mâchoires (2) passent à la condition d'accouplement.

2. Mandrin selon la revendication 1, caractérisé par le fait que les évidements (101) dans la bague de déverrouillage (100) possèdent, dans la direction de rotation conduisant à la condition de désaccouplement des coulisseaux (8), une rampe oblique (103) au moyen de laquelle un mouvement de rotation de la bague de déverrouillage (100) déplace les organes de monoeuvre (13) radialement vers l'intérieur, et par conséquent amène les coulisseaux (8) à la condition de désaccouplement.

3. Mandrin selon l'une quelconque des revendications 1 ou 2, caractérisé par le fait que ce n'est à chaque fois qu'un seul des organes de monoeuvre (13) qui peut être enfoncé radialement dans le corps (1) du mandrin par la bague de déverrouillage (100), et qu'à chaque fois tous les autres organes de manoeuvre (13) saillent radialement vers l'extérieur dans les évidements (101, 101.1) de la bague de déverrouillage (100).

4. Mandrin selon la revendication 3, caractérisé par le fait que les évidements (101, 101.1) s'étendent sur le pourtour de la bague de déverrouillage (100), et ne sont interrompus que par une surface de butée (105) pour les organes de manoeuvre (13), cette surface de butée (105) étant, dans la direction du pourtour de la bague de déverrouillage (100), plus courte que l'intervalle compris entre deux organes de manoeuvre (13) consécutifs.

5. Mandrin selon la revendication 3, caractérisé par le fait que plusieurs surfaces de butée (105) sont prévues et que les surfaces de butée (105) situées entre les évidements (101) sont, dans la direction du pourtour de la bague de déverrouillage (100), dotées d'une longueur et d'un décalage angulaire (rapporté à l'axe 9 du mandrin) par rapport à la disposition des mâchoires de serrage, tels que, lors de la rotation de la bague de déverrouillage (100), il n'y ait jamais qu'un seul des organes de manoeuvre (13) à venir en butée contre l'une des surfaces de butée (105) et à prendre la position correspondant à la condition de désaccouplement d'un coulisseau (8), et que les autres organes de manoeuvre (13) saillent alors dans les logements (101).

6. Mandrin selon la revendication 5, caractérisé par le fait que, dans l'une des directions périmétriques de la bague de déverrouillage (100), les surfaces de butée (105) se succèdent à intervalles qui sont, d'au moins la longueur de ces surfaces (105), plus courts que les intervalles entre les mâchoires de serrage (2), un évidement (101.1) possédant alors une étendue périmétrique plus importante que celle des mâchoires de serrage (2).

Fig.1

Fig. 2

Fig.3

Fig.4